# EUROPÄISCHE PATENTSCHRIFT

(11) **EP 3 610 152 B1**
(45) Veröffentlichungstag und Bekanntmachung des Hinweises auf die Patenterteilung: **02.03.2022**
(21) Anmeldenummer: 18719792.6
(22) Anmeldetag: 13.04.2018
(51) Int. Cl.: F03D 5/00

(54) **HÖHENWINDKRAFTWERK ANGEBUNDEN AM BODEN**
WIND TURBINE TETHERED TO THE GROUND
ÉOLIENNE AMARRÉ AU SOL

(30) Priorität: 13.04.2017 DE 102017206419
(43) Veröffentlichungstag der Anmeldung: 19.02.2020
(73) Patentinhaber: Sanfritsch GmbH, 72181 Starzach (DE)
(72) Erfinder: WÖLL, Oliver, 72181 Starzach (DE)
(74) Vertreter: Patentanwälte Magenbauer & Kollegen Partnerschaft mbB
(86) Internationale Anmeldenummer: PCT/EP2018/059545
(87) Internationale Veröffentlichungsnummer: WO 2018/189378

(56) Entgegenhaltungen:
- WO-A1-2014/022770
- DE-A1-102011 100 039
- GB-A- 2 441 924
- KR-A- 20100 033 086

## Beschreibung

Die Erfindung betrifft ein Höhenwindkraftwerk zur Erzeugung von Energie in unterschiedlichen Höhen, mit einer flexiblen Verbindung zum Boden und einer tragendes Gas umschließenden Hülle.

### Stand der Technik:

Es sind Höhenwindkraftwerke bekannt, welche ein Windrad oder einen Rotor beinhalten. Diese sind auch teilweise mit Helium oder einem anderen Gas, welches leichter als Luft ist, gefüllt, so dass sie eine Auftriebswirkung erzielen. Höhenwindkraftwerke werden üblicherweise von einem an der Erde verankerten Seil gehalten (US 2008/0290665 A1).

Diese Höhenwindkraftwerke sind auch in verschiedenen Formen vorhanden, meist in runder Form. Sie sind aus einem Stoff oder einem ähnlichen Material gebildet, wie beispielsweise bei einem Ballon oder Drachen (DE 656194 C).

Ein Höhenwindkraftwerk zur Erzeugung von elektrischer Energie in unterschiedlichen Höhenlagen mit einer flexiblen Verbindung zwischen Boden und einer Trägergas umschließenden Hülle ist bekannt, wobei die Hülle einen Flügel bildet und mehrere Rotoren für einen Energieerzeuger in dem Flügel angeordnet sind (WO 2014/022770 A1).

Eine Windenergieanlage und ein Verfahren zur Nutzung von Windenergie wird gezeigt, wobei die Windenergieanlage eine zur Erzeugung von Auftrieb ausgebildete und zumindest ein Windrad aufnehmende Flügelprofilstruktur aufweist (DE 10 2011 100039 A1). Die Flügelprofilstruktur umfasst zudem die Flügelprofilstruktur bei weniger oder gar keinem Wind in der Luft haltende Auftriebsballons.

Es ist ein an einer flexiblen Verbindung angeordnetes Höhenwindkraftwerk bekannt, wobei die von Auftriebskörpern in der Luft gehaltenen Rotoren in der Flügelstruktur angeordnet sind (KR 2010 0033086 A).

Auch ein Verfahren zum Betreiben einer Höhenwindkraftanlage ist bereits bekannt (GB 2 441 924 A).

Diese bekannten Höhenwindkraftwerke sind jedoch nicht so ausgelegt, dass sie über einen längeren Zeitraum in der Höhe verbleiben und allen Wind- und Wetterverhältnisse standhalten zu können.

Aufgrund der fixen Verbindung mit dem Boden und der Tatsache, dass alle Wind- und Wetterverhältnisse über einen längeren Zeitraum von der Konstruktion abgestützt werden müssen, muss hierzu ein wind- und wetterbeständiger Flügel vorhanden sein, welcher sich auch selbständig in Windrichtung ausrichten kann.

Weiterhin ist in großen Höhen der Luftdruck wesentlich geringer als auf der Erdoberfläche und die durchschnittliche Temperatur ist wesentlich geringer. Dies führt dazu, dass die bisher verwendeten elektronischen Steuerungseinheiten für die Windkrafterzeugung nicht mehr funktionsfähig sind.

Das Volumen zur Aufnahme eines Trägergases, wie beispielsweise Helium, wird von der Größe des Flügels begrenzt.

Wird im Höhenwindkraftwerk Strom erzeugt, dann kann dieser in einer Stromart vorliegen, die nicht für den Transport geeignet ist. Außerdem kann die vorliegende Netzspannung nicht für den Stromtransport geeignet sein. Wird im Höhenwindkraftwerk Druckluft erzeugt, muss diese in geeigneter Weise zur Erdoberfläche transportiert werden.

Ein weiteres Problemfeld stellt die Befestigung des Seils am Flügel dar. Aufgrund der großen Zugkräfte muss das Seil zur Aufnahme dieser Kräfte geeignet sein.

Bisher sind nur Höhenwindkraftwerke bekannt, welche einen Rotor besitzen. Dies führt zu einer Leistungsbegrenzung auf die Größe dieses Rotors.

Zumindest ein Teil dieser Probleme wird erfindungsgemäß bei einem Höhenwindkraftwerk zur Erzeugung von Druckluft oder elektrischer Energie in unterschiedlichen Höhen, mit einer flexiblen Verbindung zum Boden und einer Trägergas umschließenden Hülle dadurch gelöst, dass die Hülle zumindest abschnittsweise einen aerodynamischen Flügel bildet und mehrere Rotoren in dem Flügel untergebracht sind. Zwischen dem oder den Rotoren und dem oder den Energieerzeugern befinden sich vorzugsweise ein oder mehrere Getriebe.

Die Erfindung betrifft ein Höhenwindkraftwerk, welches am Boden befestigt ist und sich in großen Höhenlagen zwischen 2.000 m und 15.000 m, insbesondere zwischen 8.000 m und 12.000 m (Jetstream) befindet. Das Höhenwindkraftwerk ist dafür ausgelegt, Luftgeschwindigkeiten von 200 bis 500 km/h zu nutzen und eine lange Zeit in derartigen Höhenlagen zu verbleiben. Hierzu besteht die Hülle aus einer reißfesten Oberfläche, um allen Wetterbedingungen standhalten zu können. Die Hülle ist mit Seiten- und Höhenrudern ausgestattet. Weiterhin befindet sich ein Trägergas in der Hülle des Höhenwindkraftwerks. Ebenfalls befindet sich eine Druckkammer für die elektronischen Komponenten in dem Höhenwindkraftwerk.

Um die erzeugte elektrische Energie zu transformieren oder umzuwandeln befindet sich ein Transformator im Höhenwindkraftwerk. Zur Erzeugung von Druckluft sind Kompressoren vorgesehen, denen ein oder mehrere Getriebe vorgeschaltet sind. Die mittels der Kompressoren verdichtete Luft wird mittels isolierter Luftschläuchen zur Erdoberfläche transportiert. An der Erdoberfläche stehen direkt Druckluftspeicher oder Lageenergiespeicher zur Verfügung. Zur Erzeugung von Strom werden die Druckluftspeicher entleert und dadurch ein Generator angetrieben. Der Wirkungsgrad liegt bei ca. 65% inklusive der Speicherung.

Das Höhenwindkraftwerk, welches eine konstante Energieerzeugung gewährleisten muss, muss allen Wind- und Wetterverhältnissen wiederstehen können. Dementsprechend sind die Hülle und das Verankerungsseil aus einem flexiblen und zugfesten Material, insbesondere aus Kohlefaser oder Polyaramiden (Kevlar), ausgebildet.

Hierzu sind die Rotoren im Inneren des Flügels angebracht, um beispielsweise Hagelschäden überstehen zu können.

Hierzu muss der Flügel aus einem gegen Wind und Wetter stabilen Material hergestellt sein und gleichzeitig noch die Fähigkeit besitzen, sich den Windverhältnissen anpassen zu können. Dies erfolgt beispielsweise durch das Installieren von Seiten und Höhenleitwerken, welche den Flügel ausrichten.

Durch das Anbringen einer Druckkabine und einer thermischen Isolation zumindest in einem Teil des Flügels, können Bedingungen erreicht werden, welche eine funktionierende Steuerungselektronik sicherstellen. Zusätzlich kann noch bei Bedarf eine Heizeinrichtung angebracht werden.

Um das Volumen des Trägergases zu erhöhen, werden die Flügel oder spezielle Gastanks im oder am Flügel mit Trägergas gefüllt. Der Druck im Flügel oder im Tank wird erhöht, wodurch das Volumen des Trägergases und die Steifigkeit der Hülle erhöht werden.

Die Stromart wird durch einen Umwandler in eine andere Stromart umgewandelt und bei Bedarf die Spannung oder die Stromstärke ändert. Aus Sicherheitsgründen kann dies in einem Faraday'schen Käfig im Flügel stattfinden.

Der Transformator kann auch Energiespeicher aufladen, so dass ein Blitz erzeugt werden kann, um den Strom umzuwandeln.

Um die Zugkräfte des Seils an der Befestigungsstelle an der Hülle zu reduzieren, können insbesondere vorgespannte Hydraulikzylinder angebracht werden, welche einen Teil der Kraft aufnehmen.

Alternativ oder auch zusätzlich können Elektromagnete angebracht werden, welche einen weiteren Teil der Energie aufnehmen können.

Um die Leistung zu erhöhen, sind mehrere Rotoren im Flügel angebracht.

Weitere Vorteile, Merkmale und Einzelheiten der Erfindung ergeben sich aus den Unteransprüchen und der nachfolgenden Beschreibung, in der unter Bezugnahme auf die Zeichnung ein besonders bevorzugtes Ausführungsbeispiel der Erfindung beschrieben wird.

In der Zeichnung zeigen:
Figur 1: eine Frontansicht auf das Höhenwindkraftwerk;
Figur 2: einen Längsschnitt II - II durch das Höhenwindkraftwerk gemäß Figur 1; und
Figur 3: eine Draufsicht III auf das Höhenwindkraftwerk gemäß Figur 1.

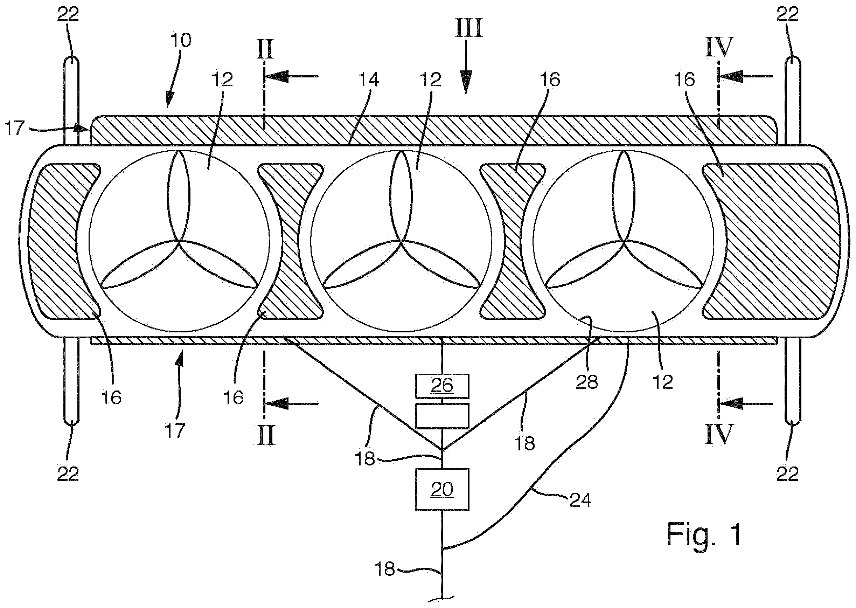

In der Figur 1 ist ein Flügel 10 in Form eines Nurflüglers in der Vorderansicht zu sehen. In diesem Nurflügler befinden sich mehrere Rotoren 12. Dabei wird der Flügel 10 von einer Hülle 14 gebildet, in der neben den Rotoren 12 mit Trägergas gefüllte Stabilisatoren 16 vorgesehen sind. Zusätzlicher Platz für das Trägergas befindet sich auch in einer Art Luftröhre 17 ober- und/oder unterhalb der Hülle 14. Der Stabilisator 16 und/oder die Luftröhre 17 besteht bzw. bestehen aus einem zugfesten Material nach Art eines Wetterballons, der auch den Druck des sich ausdehnenden Gases aufnehmen kann. Diese Stabilisatoren 16 besitzen eine Eigensteifigkeit und sind druckdicht und dienen als Traggerüst für die Hülle 14 und die Rotoren 12 In der Hülle 14 selbst sind ebenfalls fachwerkartig Verstrebungen angeordnet. Der Flügel 10 ist an einem Halteseil 18 befestigt, wobei im Halteseil 18 ein Hydraulikzylinder 20 eingeschaltet ist. Das Halteseil 18 verzweigt sich nach dem Hydraulikzylinder 20 und greift an mehreren Punkten an der Hülle 14 des Flügels 10 an. Die seitlichen Enden des Flügels 10 weist Winglets 22 zur Stabilisierung auf. Ein Energietransport erfolgt mittels eines Stromkabels, das nach dem Hydraulikzylinder 20 an das Halteseil 18 befestigt wird. Schließlich sind noch Elektromagnete 26 erkennbar, die ebenfalls der Dämpfung des Flügels 10 dienen.

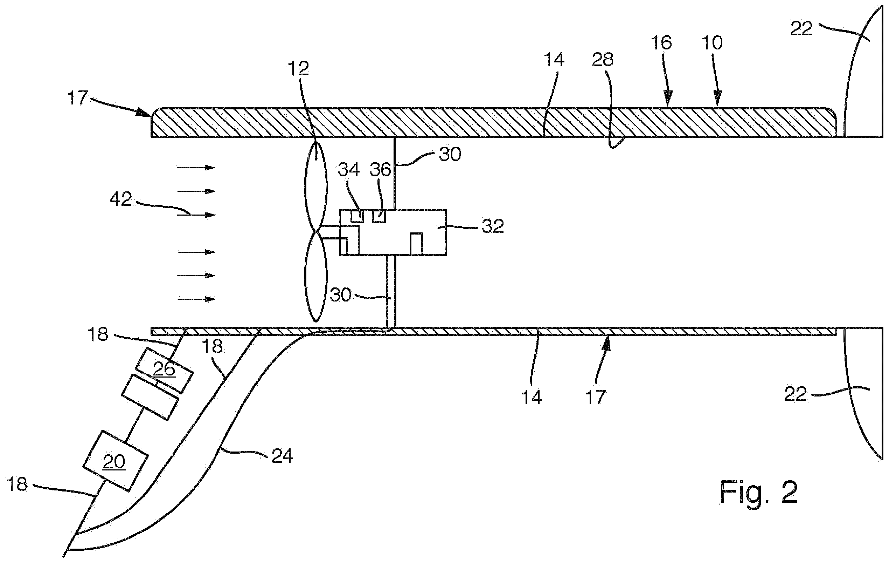

Die Figur 2 zeigt den Flügel 10 gemäß Figur 1 im Längsschnitt II - II. Es ist ein Rotor 12 erkennbar, der in einer Luftröhre 28 liegt. Am Ende des Flügels 10 sind zwei der Winglets 22 dargestellt. In der Luftröhre 28 befindet sich eine Befestigung 30, mit welcher ein Maschinenhaus 32 gehalten wird. An der Unterseite und vorderen Ende des Flügels 10 greifen das Halteseil 18 mit vorgespannte Druck- oder Hydraulikzylinder 20 und dem Elektromagnet sowie das Stromkabel 24 an. Im Maschinenhaus 32 befindet sind ein Transformator 34 und eine Heizeinrichtung 36. Mit dem Bezugszeichen 42 wird die Windrichtung dargestellt.

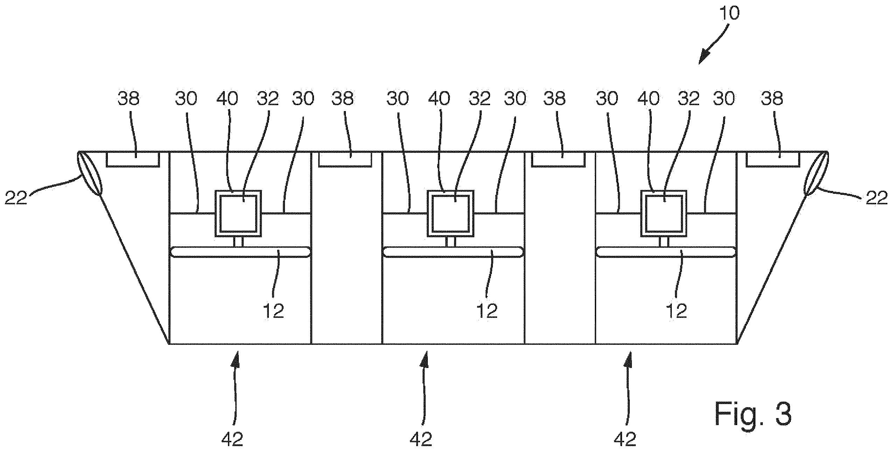

Die Figur 3 zeigt den Flügel 10 in der Draufsicht. Seitlich sind die Winglets 22 dargestellt, die den Flügel 10 stabilisieren. An hinteren Ende des Flügels 10 befinden sich Höhen- und Seitenruder 38. Das Motorhaus 32 wird von einer thermischen Isolierung 40 umgeben und trägt die Welle für den Rotor 12.

Der Flügel 10 ist mit dem Treibgas Helium gefüllt, so dass das gesamte Gewicht des Flügels 10 durch das Helium getragen wird. Hierzu wird das Helium in die Stabilisatoren 16 des Flügels 10 eingefüllt. Der Flügel 10 ist über das Halteseil 18 mit der Erdoberfläche verbunden.

Der Wind strömt in Richtung 42 durch die Rotoren 12, wobei die Rotoren 12 die im Motorhaus 32 sich befindenden Generatoren antreiben, wodurch die Windenergie in elektrische Energie umgewandelt wird. Diese elektrische Energie wird über das Stromkabel 24, das am Halteseil 18 befestigt ist, zur Erdoberfläche transportiert. Um die passende Stromart und Spannung zu erhalten, wird die erzeugte elektrische Energie im Transformator 34 geändert. Alternativ können auch Kompressoren zur Erzeugung von Druckluft vorgesehen sein, welche von den Rotoren angetrieben werden.

Mit Hilfe der Seiten- und Höhenruder 38 kann sich der Flügel 10 optimal in den Wind stellen. Die Winglets 22 erhöhen die Stabilität des Flügels 10.

Die innerhalb der Luftröhre 28 nach innenverlegten Rotoren 12 verhindern eine Beschädigung beispielsweise durch Hagel. Außerdem wird die Luft optimal den Rotoren 12 zugeführt. Dabei kann die Luftröhre 28 mit Luftleitblechen versehen sein und benachbarte Rotoren 12 können auch gegenläufig sein.

Das als Druckkabine ausgebildete Maschinenhaus 32 sowie die Heizeinrichtung 36 können Umgebungsbedingungen herstellen, wie diese auf der Erdoberfläche anzutreffen sind. Zusätzlich dient hierzu noch die thermische Isolierung 40 um das oder im Maschinenhaus 32.

Zur Aufnahme der Zugkräfte durch den Wind nehmen die vorgespannten Druck- oder Hydraulikzylinder 20 ein Teil der mechanischen Energie auf. Ein weiterer Teil kann durch den angeschlossenen Elektromagneten 26 aufgenommen werden. Die elektrische Energie bezieht der Elektromagnet 26 aus dem Generator. Der Elektromagnet 26 wird nur bei Bedarf zugeschaltet.

Die erzeugte Druckluft wird mittels eines oder mehreren Luftschläuchen auf die Erdoberfläche geleitet und dort gespeichert oder in eine andere Energieart, z.B. in elektrische Energie umgewandelt. Der Luftschlauch wird am Halteseil 18 befestigt.

## Patentansprüche

1. Höhenwindkraftwerk zur Erzeugung von elektrischer Energie in unterschiedlichen Höhenlagen, mit einer flexiblen Verbindung (18) zum Boden und einer Trägergas umschließenden Hülle (14), wobei die Hülle (14) einen Flügel (10) bildet und mehrere Rotoren (12) für einen Energieerzeuger in dem Flügel (10) vorgesehen sind und die Rotoren (12) im Inneren des Flügels (10) angebracht sind, **dadurch gekennzeichnet, dass** ein Maschinenhaus (32) im Flügel (10) vorgesehen ist, welches als Druckkabine ausgebildet ist , um einen erhöhten Druck im Maschinenhaus (32) zu erzeugen.

2. Höhenwindkraftwerk nach Anspruch 1, **dadurch gekennzeichnet, dass** die Hülle (14) und/oder die flexible Verbindung (18) aus einem allen in der Gebrauchslage vorkommenden Wind- und Wetterverhältnissen beständigen Material, insbesondere Polyaramid, hergestellt ist.

3. Höhenwindkraftwerk nach einem der vorhergehenden Ansprüche, **dadurch gekennzeichnet, dass** Seiten- und Höhenruder (38) im bzw. am Flügel (10) eingebaut sind, um den Flügel (10) auszurichten.

4. Höhenwindkraftwerk nach einem der vorhergehenden Ansprüche, **dadurch gekennzeichnet, dass** die Hülle (14) zumindest abschnittsweise einen festen Flügel (10) bildet.

5. Höhenwindkraftwerk nach einem der vorhergehenden Ansprüche, **dadurch gekennzeichnet, dass** ein Maschinenhaus (32) im Flügel (10) vorgesehen ist und eine thermische Isolationsschicht (40) und/oder eine Heizvorrichtung (36) um das oder im Maschinenhaus (32) angebracht ist/sind, um eine erhöhte Temperatur im Maschinenhaus (32) zu erzeugen.

6. Höhenwindkraftwerk nach einem der vorhergehenden Ansprüche, **dadurch gekennzeichnet, dass** der Flügel (10) spezielle Stabilisatoren (16) und/oder eine Luftröhre (17) ober- und/oder unterhalb der Hülle (14) zur Aufnahme eines Trägergases aufweist.

7. Höhenwindkraftwerk nach Anspruch 6, **dadurch gekennzeichnet, dass** der Stabilisator (16) und/oder die Luftröhre (17) aus einem zugfesten Material besteht bzw. bestehen.

8. Höhenwindkraftwerk nach einem der vorhergehenden Ansprüche, **dadurch gekennzeichnet, dass** ein Stromwandler, insbesondere in einem Maschinenhaus (32) vorgesehen ist, um den erzeugten Strom in eine andere Stromart oder in einen Blitz umzuwandeln und/oder zu transformieren.

9. Höhenwindkraftwerk nach Anspruch 8, **dadurch gekennzeichnet, dass** im Flügel (10) ein Faraday'scher Käfig für einen Stromwandler vorgesehen ist.

10. Höhenwindkraftwerk nach einem der vorhergehenden Ansprüche, **dadurch gekennzeichnet, dass** zwischen Flügel (10) und der flexiblen Verbindung wenigstens ein Druck- oder Hydraulikdämpfer (20) versehen ist, um einen Teil der Zugkraft aufzunehmen.

11. Höhenwindkraftwerk nach Anspruch 10, **dadurch gekennzeichnet, dass** der Druck- oder Hydraulikdämpfer (20) am Flügel (10) angreift.

12. Höhenwindkraftwerk nach einem der vorhergehenden Ansprüche, **dadurch gekennzeichnet, dass** Elektromagnete (26) am Flügel (10) befestigt sind, um einen Teil der Zugkraft aufzunehmen.

13. Höhenwindkraftwerk nach einem der vorhergehenden Ansprüche, **dadurch gekennzeichnet, dass** der Energieerzeuger ein Kompressor zur Verdichtung von Luft ist.

14. Höhenwindkraftwerk nach Anspruch 13, **dadurch gekennzeichnet, dass** dem Kompressor ein oder mehrere Getriebe vorgeschaltet sind, so dass die Rotoren (12) den Kompressor antreiben können.

15. Höhenwindkraftwerk nach einem der vorhergehenden Ansprüche, **dadurch gekennzeichnet, dass** zum Transport von Druckluft ein oder mehrere Luftschläuche vorgesehen sind, die den Kompressor mit einem Druckluftspeicher auf der Erdoberfläche verbinden, wobei die Luftschläuche insbesondere isoliert sind.

16. Höhenwindkraftwerk nach Anspruch 15, **dadurch gekennzeichnet, dass** die Isolierung des Luftschlauches mittels Kryptongas, Aerogelen oder einer Vakuumdämmung erfolgt.

## Claims

1. High-altitude wind power plant for the generation of electrical energy at various heights, with a flexible connection (18) to the ground and a casing (14) enclosing a carrier gas, wherein the casing (14) forms a wing (10), and several rotors (12) are provided for an energy generator in the wing (10) and the rotors (12) are mounted in the interior of the wing (10), **characterised in that** a machine house (32) is provided in the wing (10) and is in the form of a pressurised cabin, in order to generate increased pressure in the machine house (32).

2. High-altitude wind power plant according to claim 1, **characterised in that** the casing (14) and/or the flexible connection (18) are or is made of a material, in particular aromatic polyamide, resistant in the position of use to all occurring wind and weather conditions.

3. High-altitude wind power plant according to any of the preceding claims, **characterised in that** rudders and elevators (38) are installed in or on the wing (10), in order to align the wing (10).

4. High-altitude wind power plant according to any of the preceding claims, **characterised in that** the casing (14) forms a solid wing (10) at least in sections.

5. High-altitude wind power plant according to any of the preceding claims, **characterised in that** a machine house (32) is provided in the wing (10) and/or a thermally insulating layer (40) and/or a heating device (36) is or are fitted around or in the machine house (32), in order to generate an increased temperature in the machine house (32).

6. High-altitude wind power plant according to any of the preceding claims, **characterised in that** the wing (10) has special stabilisers (16) and/or air pipes (17) above and/or below the casing (14) to hold a carrier gas.

7. High-altitude wind power plant according to claim 6, **characterised in that** the stabiliser (16) and/or the air pipes (17) is or are made of a material with high tensile strength.

8. High-altitude wind power plant according to any of the preceding claims, **characterised in that** a current transformer is provided, in particular in a machine house (32), in order to convert the current generated into another type of current or into a flash and/or to transform it.

9. High-altitude wind power plant according to claim 8, **characterised in that** a Faraday cage for a current transformer is provided in the wing (10).

10. High-altitude wind power plant according to any of the preceding claims, **characterised in that** at least one pressure or hydraulic damper (20) is provided between the wing (10) and the flexible connection, in order to absorb a portion of the tensile force.

11. High-altitude wind power plant according to claim 10, **characterised in that** the pressure or hydraulic damper (20) acts on the wing (10).

12. High-altitude wind power plant according to any of the preceding claims, **characterised in that** electromagnets (26) are fixed to the wing (10), in order to absorb a portion of the tensile force.

13. High-altitude wind power plant according to any of the preceding claims, **characterised in that** the energy generator is a compressor for the compression of air.

14. High-altitude wind power plant according to claim 13, **characterised in that** one or more gears are connected upstream of the compressor, so that the rotors (12) can drive the compressor.

15. High-altitude wind power plant according to any of the preceding claims, **characterised in that**, for the conveyance of compressed air, there are provided one or more air hoses which connect the compressor with a compressed air reservoir on the ground surface, wherein the air hoses are in particular insulated.

16. High-altitude wind power plant according to claim 15, **characterised in that** the insulation is effected by means of krypton gas, aerogel or vacuum insulation.

## Revendications

1. Eolienne réglable en hauteur destinée à produire de l'énergie électrique à différentes positions en hauteur, avec un raccordement flexible (18) au sol et une gaine (14) renfermant du gaz porteur, dans laquelle la gaine (14) forme une pale (10) et plusieurs rotors (12) sont prévus dans la pale (10) pour un producteur d'énergie et les rotors (12) sont installés à l'intérieur de la pale (10), **caractérisée en ce qu'**un carter de machine (32) est prévu dans la pale (10), lequel est réalisé comme une cabine pressurisée pour produire une pression plus élevée dans le carter de machine (32).

2. Eolienne réglable en hauteur selon la revendication 1, **caractérisée en ce que** la gaine (14) et/ou le raccordement flexible (18) sont fabriqués à partir d'un matériau résistant aux conditions de vent et météorologiques apparaissant dans la position d'utilisation, en particulier à partir de polyaramide.

3. Eolienne réglable en hauteur selon l'une quelconque des revendications précédentes, **caractérisée en ce que** des gouvernails latéraux et en hauteur (38) sont montés dans ou sur la pale (10) pour orienter la pale (10).

4. Eolienne réglable en hauteur selon l'une quelconque des revendications précédentes, **caractérisée en ce que** la gaine (14) forme au moins par endroits une pale (10) fixe.

5. Eolienne réglable en hauteur selon l'une quelconque des revendications précédentes, **caractérisée en ce qu'**un carter de machine (32) est prévu dans la pale (10) et une couche d'isolation thermique (40) et/ou un dispositif de chauffage (36) sont installés autour du carter de machine (32) ou dans celui-ci pour produire une température plus élevée dans le carter de machine (32).

6. Eolienne réglable en hauteur selon l'une quelconque des revendications précédentes, **caractérisée en ce que** la pale (10) présente des stabilisateurs (16) spécifiques et/ou un tuyau d'air (17) au-dessus et/ou en dessous de la gaine (14) pour recevoir un gaz porteur.

7. Eolienne réglable en hauteur selon la revendication 6, **caractérisée en ce que** le stabilisateur (16) et/ou le tube d'air (17) sont constitués d'un matériau résistant à la traction.

8. Eolienne réglable en hauteur selon l'une quelconque des revendications précédentes, **caractérisée en ce qu'**un transformateur de courant, est prévu en particulier dans un carter de machine (32) pour convertir et/ou pour transformer le courant produit en un autre type de courant ou en un éclair/flash.

9. Eolienne réglable en hauteur selon la revendication 8, **caractérisée en ce qu'**une cage de Faraday est prévue pour un transformateur de courant dans la pale (10).

10. Eolienne réglable en hauteur selon l'une quelconque des revendications précédentes, **caractérisée en ce qu'**au moins un amortisseur de pression ou hydraulique (20) est prévu entre la pale (10) et le raccordement flexible pour recevoir une partie de la force de traction.

11. Eolienne réglable en hauteur selon la revendication 10, **caractérisée en ce que** l'amortisseur de pression ou hydraulique (20) s'engage sur la pale (10).

12. Eolienne réglable en hauteur selon l'une quelconque des revendications précédentes, **caractérisée en ce que** des électroaimants (26) sont fixés sur la pale (10) pour recevoir une partie de la force de traction.

13. Eolienne réglable en hauteur selon l'une quelconque des revendications précédentes, **caractérisée en ce que** le producteur d'énergie est un compresseur pour la compression d'air.

14. Eolienne réglable en hauteur selon la revendication 13, **caractérisée en ce qu'**une ou plusieurs transmissions sont montées en amont du compresseur de sorte que les rotors (12) peuvent entraîner le compresseur.

15. Eolienne réglable en hauteur selon l'une quelconque des revendications précédentes, **caractérisée en ce que** sont prévus pour le transport d'air comprimé un ou plusieurs tuyaux flexibles d'air, qui raccordent le compresseur à un accumulateur d'air comprimé sur la surface au sol, dans laquelle les tuyaux flexibles d'air sont en particulier isolés.

16. Eolienne réglable en hauteur selon la revendication 15, **caractérisée en ce que** l'isolation du tuyau flexible d'air est effectuée au moyen de krypton, d'aérogels ou d'une isolation sous vide.
